# EUROPEAN PATENT APPLICATION

(11) **EP 1 607 884 A1**
(43) Date of publication of application: **21.12.2005**
(21) Application number: 04405375.9
(22) Date of filing: 18.06.2004
(51) Int. Cl.: G06F 17/30

(54) **Storing measurement data**

(71) Applicant: International Business Machines Corporation, Armonk, N.Y. 10504 (US)
(72) Inventor: Hurley, Paul T., 8802 Kilchberg (CH); Kind, Andreas, 8802 Kilchberg (CH); Neeser, Fredy D., 8135 Langnau am Albis (CH)
(74) Representative: Toleti, Martin

(57) **Abstract**

A method and an entity are introduced for storing a set of data. A set of primary data (s1) is received comprising a first data value (Hs1) associated to a first parameter interval (p_es1) which first parameter interval (p_es1) is related to a first scale (y) comprising a first resolution (dy). This set of primary data (s1) is transformed into a set of preprocessed data (p1) comprising a second data value (Hp1) associated to a second parameter interval (p_ep1) which second parameter interval (p_ep1) is related to a second scale (x) comprising a second resolution (dx), by determining the second data value (Hp1) such that a volume (Vs1) of the set of primary data (s1) determined by the first parameter interval (p_es1) and the first data value (Hs1) is preserved in the set of preprocessed data (p1). An entry is stored in a database (34) which entry is based on said set of preprocessed data (p1).

## Description

### FIELD OF THE INVENTION

The invention relates to a method and an entity for storing data sets.

### BACKGROUND OF THE INVENTION

The present invention generally relates to a process of electronic archiving and aggregating of data sets in databases. More particularly, the invention relates to the area of data traffic measurement in computer networks, sometimes referred to as network profiling. A measurement process, also referred to as a probing or sampling process, may generate numerical values that have to be electronically archived in a database for later processing, analysis, graphical presentation, proof or verification, diagnosis or other reasons. For continuous monitoring, it is often desirable to preserve storage and to keep the database size below some predefined maximum. This may be achieved by keeping only the most recent data in the database, i.e., by implementing a sliding window. In a time-series context, a sliding window could mean that only values of e.g. the last 24 hours are stored. Values older than 24 hours are overwritten. A typical implementation for a sliding window is a circular buffer.

Another implementation of such aggregation mechanism is what is called a Round-Robin Database (RDD) according to http://people.ee.ethz.ch/~oetiker/webtools/rrdtool, accessed and retrieved on the internet on April 19, 2004. RRD is a system to store and display time-series data. RRD creates fixed-size databases with data arrays of predetermined lengths, where multiple arrays are used to record samples of multiple variables or parameters, the so-called primary data. RRD provides means to fill these arrays with primary data in a circular manner, such that an array holds only the most recent data samples, corresponding to a sliding window of the parameter time series. RRD allows the use of so-called "consolidation" functions such as increment, maximum, minimum, or average, whereby primary data are replaced by "consolidated" data.

However, applying RRD, for instance, in the context of network profiling becomes difficult, since values are inserted into an RRD array for a specific point in time. However, in the network profiling context - but also in many other data measurement applications - primary measurement data are associated with a parameter interval e.g. a time interval, rather than a single parameter value. Additionally, the data arrays in an RRD application consume disk space for all potential aggregation data values, even if the data arrays are filled only sparsely. For instance, if traffic information for a particular host address was observed only during a short time during a month e.g. because of dynamic address allocation, RRD requires the full array to be allocated.

Thus, it is desired to provide a method and an entity for storing sets of data in an efficient way simultaneously saving memory.

### SUMMARY OF THE INVENTION

According to one aspect of the present invention, there is provided a method for storing a set of data, this method comprises receiving a set of primary data comprising a first data value associated to a first parameter interval which first parameter interval is related to a first scale comprising a first resolution, transforming this set of primary data into a set of preprocessed data comprising a second data value associated to a second parameter interval which second parameter interval is related to a second scale comprising a second resolution, by way of determining the second data value such that a volume of the set of primary data determined by the first parameter interval and the first data value is preserved in this set of preprocessed data, and recording an entry into a database which is based on the set of preprocessed data.

The invention provides a mechanism for the efficient preprocessing, insertion and storage of numeric measurement data in a database. The invention further allows the aggregation of data series, where primary data values are associated with parameter intervals rather than single parameter values. For time-series data, the invention further allows the implementation of a sliding window for preserving database storage.

Numerical values of data are often obtained by repetitively measuring a physical quantity y for different values of a parameter p. The physical quantity may be thought of as a function y = f(p) and the numerical values or samples y(1) = f(p(1)), y(2) = f(p(2)), ... form a data sequence. The parameter p can represent time, denoted by t, or some other independent variable x such as a spatial coordinate. A measurement process may employ uniform sampling, in which case p(n) = p0+n*delta for some fixed sampling interval delta, but need not. Moreover, the parameter values p(n) may be monotonically increasing, i.e., p(n) <= p(n+1), but need not.

E.g. in networking applications as described in more detail below, a numerical data value may be associated with a parameter interval, rather than a specific parameter value p. This is for instance the case when the measurement process provides a data value for a time period - the term period is also specified as interval in the following - given by a start time and an end time. Alternatively, a volume can be given for a particular time interval such that the corresponding data value can be derived by dividing the volume by the time interval. The invention particularly addresses such appearance of primary measurement data sets defined preferably by at least two of the following: data value, parameter interval or volume. Thus, it is understood that the scope of the present invention also reads on embodiments which do not explicitly work with e.g. the value of data sets but instead only with the volume.

Directly storing the samples generated by the measurement process, which samples are also referred to as primary data, can result in an excessive amount of storage data or may be inadequate for fast processing, analysis and presentation. In such cases, it is desired to preprocess primary data, e.g., by resampling or interpolation at a different time resolution and/or by aggregation with data stored earlier, and to store the preprocessed data in the database.

Thus, the invention addresses the storing of a data set received in form of a set of primary data which set comprises a first data value associated to a first parameter interval regarding a given parameter resolution. Such set of primary data is preprocessed into a preprocessed set of data comprising a second data value associated to a second parameter interval which second parameter interval is related to a second scale comprising a second resolution. This preprocessing can be achieved in different ways as set out below. The entry in the database is then based on the set of preprocessed data. Thus, the entry either directly includes information describing the set of preprocessed data or is derived from the set of preprocessed data, e.g. by way of sampling in case the set of preprocessed data is not available yet in the form of samples.

This way of storing data sets is advantageous as a simple mechanism is provided to store information related to large numbers of data values associated to different parameter intervals by simultaneously reducing the memory capacity required. Also, with regard to storing multiple sets of data as will be described later on the mechanism is volume preserving in a sense that the sum of all inserted values during a particular interval on the second scale represents the volumes given for the sets of primary data for that interval. In addition, fast access to a large number of data is granted as well as fast access to accumulated, average, minimum, and maximum of large numbers of data. Fast access is achieved because the access to the values stored is constantly independent from the values inserted and independent from the storage period.

The present idea is in particular preferred to be applied in network profiling applications where information about network usage should generally be archived with high resolution as well as with low resolution. High resolution - which preferably comprises resolution in the order of seconds in case time is the relevant scale - is applied in short term diagnosis and fault analysis whereas low resolution - which preferably comprises resolution in the order of hours in case time is the relevant scale - is applied for long term traffic forecasting and trend analysis.

As an example for the aggregation of network statistics, a router in an IP (Internet Protocol)-based data network is considered which forwards data packets of different flows between different hosts. In network profiling, a series of packets with common properties of the packet headers is known as a flow. A flow has a starting time t_s in seconds, an ending time t_e in seconds, and a data size in bytes and/or number of packets. The data size of a flow is an example of primary measurement data that is associated with a parameter interval [t_s,t_e], rather than a single parameter t. For aggregation of multiple flows, each flow data size must first be normalized by the length of the interval, t_e-t_s, in order to obtain an average data rate over the interval [t_s, t_e]. The router may be configured to repeatedly send statistics regarding each flow to a dedicated statistics collector in the network. The statistics preferably comprises sets of primary data. Such statistics collector can e.g. be used together with a preferred embodiment of the claimed entity. If a statistics collecting entity is interested in the overall data rate generated by one user, it needs to aggregate the data rates over all flows with participation of that host, also taking into account that flows may overlap in time.

Transforming the set of primary data into the set of preprocessed data is particularly helpful if said resolution of said first scale is different to said resolution of said second scale. Typically, the resolution of the second scale is more coarse than the resolution of the first scale such that data of the primary set are sort of compressed when transformed into data of the preprocessed set. The loss of some details in the preprocessed data as recorded compared to the primary data as received might justify a gain in memory space for profiling such data.

Other preferred embodiments teach how the set of primary data is transferred into the set of preprocessed data: The volume of the set of primary data given by the first parameter interval multiplied with the first data value is preferably equal to a volume of the set of preprocessed data given by the second data value multiplied with the second parameter interval. This volume preserving approach assures that core information such as the volume of a set of primary data is not lost across the transformation. This approach is of particular benefit in a network profiling environment where the volume of such data set represents the usage of some network resources such as a router.

Prior to determining the volume and thus the data value assigned to the set of preprocessed data, the second parameter interval of such set of preprocessed data is determined: Preferably, the parameter values limiting the first parameter interval on the first scale are transformed into parameter values limiting the second parameter interval on the second scale which parameter values on the second scale are parameter values admitted on the second scale that come closest to the parameter values of the first parameter interval.

The second parameter interval and the associated second data value of the set of preprocessed data are not necessarily the information to be finally recorded in the database, but of course can be. Alternatively, such second parameter interval is sampled at a given sampling rate, and values sampled therefrom are recorded into such database. This way of recording information is in particular useful when different sets of preprocessed data are aggregated before storing into the database as described below. Then parameter intervals of different sets of preprocessed data overlap such that different data values are assigned to different parameter values.

In this context, in many types of applications the focus is not on real-time recording sets of preprocessed data. Such sets can be cached for some time and afterwards a record entry based on multiple sets of preprocessed data can be build from the cached sets of preprocessed data, e.g. by way of aggregation. In the same way, the received sets of primary data can be cached for some time which sets are afterwards processed into sets of preprocessed data according to one of the embodiments introduced above.

In another preferred embodiment, the method of inserting a set of data into the database comprises steps of: Providing a sampling rate for the second scale. Assigning to each sample a fraction of the volume as entry. The fraction can be determined by means of dividing the volume of the set of primary data by the number of samples. The number of samples is determined by the second parameter interval. The number of samples preferably covers the second parameter interval. The number of samples covering the second parameter interval form a sample array. Thus, the second parameter interval is mapped into an array of samples, each sample providing an entry which entry is representing a fraction of the volume of the set of primary data to be stored. The entries are stored in the database. Consequently, an aggregated sample array is stored that is logically indexed by the number of samples. For particularly storing multiple sets of data, entries in the aggregated sample array are preferably aggregated by entries derived from fractions of volumes of new sets of primary data to be stored.

The following preferred embodiment describes the way two or more sets of primary data are preprocessed and recorded. In case another set of primary data is received this other set comprises another first data value associated to a another first parameter interval which other first parameter interval is related to said first scale comprising said first resolution, this other set of primary data is also transformed into another set of preprocessed data comprising another second data value associated to another second parameter interval. The other second parameter interval is related to the second scale comprising the second resolution by determining the other second data value such that a volume of the other set of primary data determined by said other first parameter interval and said other first data value is preserved in the other set of preprocessed data. Any entry recorded into the database is based on the sets of preprocessed data comprising at least the first set of preprocessed data and the other set of preprocessed data.

Different sets of preprocessed data can be aggregated before recorded. Any entry is then based on the aggregated sets of preprocessed data. Alternatively, any set of such preprocessed data including the parameter interval and the associated data value, but also any other representation of such set of preprocessed data, can be recorded into the database by way of aggregating such entry to an existing entry based on the set of preprocessed data.

Both alternatives - the aggregation of sets of preprocessed data prior to recording or the recording of sets of preprocessed data by way of aggregating records - can make use of sampling the sets of preprocessed data at a given sampling rate, and recording values sampled therefrom as entries into said database.

The sample values then form an index array that is logically indexed by the number of samples. Memory space in the database is preferably only allocated starting with the first sample a value is associated to. Entries in said aggregated sample array can be incremented by add ing values derived from new sets of primary data.

Generally, the aggregation of sets of data is not limited to the number of two sets of data. However, in a typical profiling environment, thousands of sets arrive at such profiling entity to be stored in one way or the other.

According to another aspect of the present invention, there is provided an entity for recording measurement data, the entity comprising a control unit designed for executing steps according to the method as claimed in any one of the method claims.

According to a further aspect of the present invention, there is provided a computer program element, comprising computer program code for executing a method as claimed in any one of the method claims when loaded into a processor unit of a computer.

According to another aspect of the present invention, there is provided a computer program product stored on a computer usable medium, comprising computer readable program code for causing a computer to perform the steps of a method as claimed in any one of the method claims.

Advantages of the apparatus, the computer program element, the computer program product and their embodiments go along with the advantages of the method and its embodiments as described above.

### BRIEF DESCRIPTION OF THE DRAWINGS

The invention and its embodiments will be more fully appreciated by reference to the following detailed description of presently preferred but nonetheless illustrative embodiments in accordance with the present invention when taken in conjunction with the accompanying drawings.

The figures are illustrating:
- FIG. 1: a block diagram comprising an entity according to the present invention,
- FIG. 2: a flow chart according to an embodiment of the present invention,
- FIG. 3: the transformation from a set of primary data in FIG. 3a) into a set of preprocessed data in FIG. 3b),
- FIG. 4: another transformation from a set of primary data in FIG. 4a) into a set of preprocessed data in FIG. 4b),
- FIG. 5: a transformation of sets of primary data into sets of preprocessed data and an aggregation of such sets of preprocessed data,
- FIG. 6: representations of entries stored in a database, and
- FIG. 7: an incremental array allocation on a recording scale.

Different figures may contain identical references, representing elements with similar or uniform content.

### DETAILED DESCRIPTION OF THE DRAWINGS

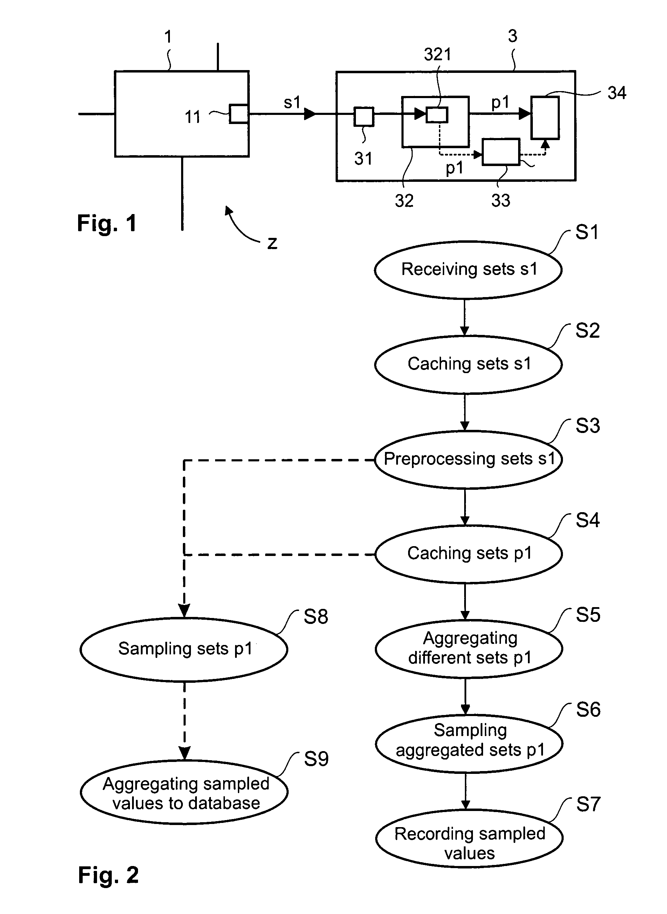

FIG.1 illustrates a block diagram comprising an entity 3 according to the present invention. A router 1 being part of a communications network 2 features delivering sets s1 of primary data to an output 11. Such sets s1 are characterized by at least two out of the following three items: a parameter interval which parameter can e.g. be "time"; a data value associated to the parameter interval; a volume defined by the parameter interval multiplied with the data value. Additional information delivered might comprise an indicator to which packet flow such set of primary data belongs to. E.g. some routers support such export of router data under protocols like NetFlow - see
http://www.cisco.com/warp/public/cc/pd/iosw/ioft/neflct/tech/napps wp.htm) - or IPFIX - see http://www.ietf.ors/html.charters/ipfix-charter.html.

Entity 3 receives such sets s1 of primary data delivered from the router 1 at a port 31 of entity 3. Entity 3 comprises a control unit 32 which includes a preprocessing controller 321. The preprocessing controller 321 transforms received sets s1 of primary data into sets p1 of preprocessed data. Such sets p1 of preprocessed data including derivatives therefrom can be stored in a database 34, or can be cached in cache 33 before being recorded in the database 34. Preferably, control unit 32 is controlling the flow of data between the cache 33 and the database 34 in case a cache is used.

Control unit 32 can be embodied as hardware, software, or a combination of hardware and software.

It is understood, that entity 3 is not necessarily formed as a single physical unit comprising all the elements being part of entity 3. E.g. the database 34 can be part of a physical unit together with the control unit 32 and other elements, but can also be located elsewhere. Thus, entity 3 can also be embodied as a distributed entity comprising elements at different locations.

Entity 3 can perform a method as illustrated according to the flow chart of FIG. 2.

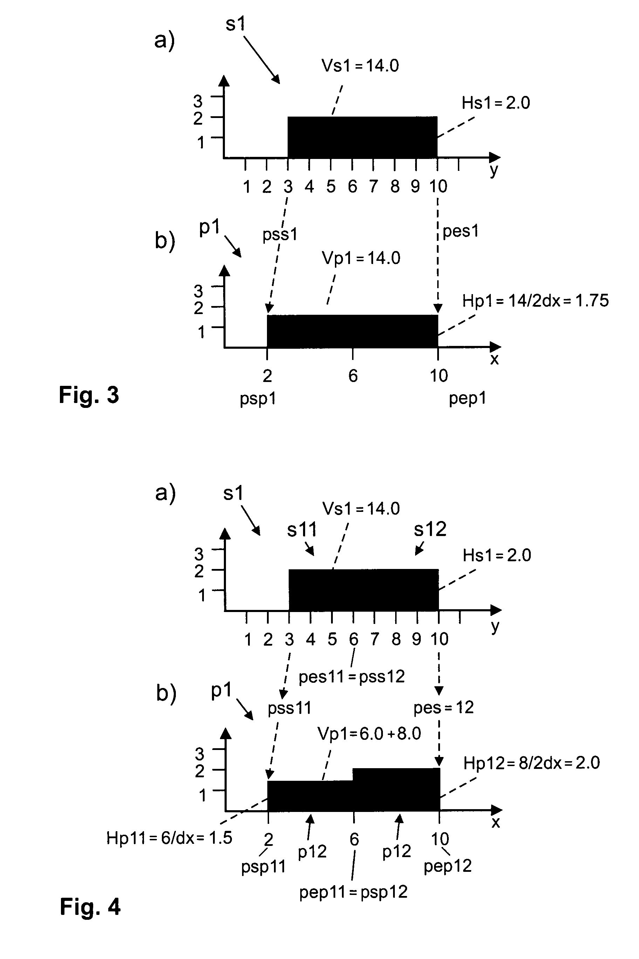

After having received sets s1 of primary data in step S1, such sets s 1 are cached in another cache of entity 3 - not shown in FIG. 1 - in step S2. Whenever processing resources are available, such sets s1 are transformed into sets p1 of preprocessed data according to step S3. A possible way of transformation is illustrated in FIG. 3 and will be explained later on. Sets p1 of preprocessed data are then cached in cache 33 in step S4. In step S5, cached sets p1 of preprocessed data are aggregated over the second scale. The aggregated sets p 1 are sampled in step S6, the sampled values are then stored in a database according to step S7.

Alternatively, as indicated by the dotted line in FIG. 2, a set p1 of preprocessed data is - immediately of after being cached - sampled according to step S8 which sampled values are then aggregated to the existing values in the database. A set of sampled values associated to a set of preprocessed data is also called an entry or a record in this context. In a particularly preferred embodiment, such sampled values can yet be the result of the preprocessing step without further action in form of sampling step S8.

FIG. 3 illustrates a process of transforming a set s1 of primary data into a set p 1 of preprocessed data. An example of a set s of primary data is given in FIG. 3a, while the corresponding set p1 of preprocessed data is shown in FIG. 3b. The set s1 of primary data is given in form of a data value Hs1 = 2.0 associated to a parameter interval p_es1= [pss1; pes1] with a start parameter value pss1 and an end parameter value pes1, i.e. in this example a parameter interval p_es1 = [3; 10]. The parameter scale is y with a parameter resolution dy = 1.0. The volume of the set s1 of primary data is Vs1 = 14.0, given by multiplying the data value Hs1 with the parameter interval p_es1 = pes1 - pss 1 = 7.0. In case the parameter interval p_es1 is very short, a single parameter value could be regarded as a special case of a parameter interval p_es1 with p_es1 = pss 1 + delta_min with delta_min being smaller than any sampling interval dy.

Data set preprocessing involves mapping the set s 1 of primary data [p_es1; Hs1] given at resolution dy into a set p1 of preprocessed data [p_ep1; Hp1] on another parameter scale x at a given resolution dx. Resolution of the second scale dx = 4 which can be derived from FIG. 3b). When transforming the sets, parameter values may be clipped according to the mapping to the new scale x, e.g. by clipping the parameter interval of the set of primary data to the parameter interval of the set of preprocessed data. As explained later on, the second scale x can a priori be limited in its extension. Limitation boundaries of such limited scale are also called logical array bounds. If a parameter interval of a set of primary data is entirely or partly outside the logical array bounds of the second scale to be transformed onto, the entire set of primary data value may be ignored or the parameter interval of the set of primary data is clipped in the transformation process. A transformation of the parameter interval associated to the set of primary data into another parameter interval associated to the set of preprocessed data is also needed if the parameter values associated to the primary data do not match to parameter values allowed on the second scale. In the example shown in FIG. 3, allowed parameter values on scale x are 2, 6, 10, ...., such that parameter value pes1 = 10 associated to the primary data matches with a parameter value pep 1 = 10 on the second scale x. However, parameter value pes1 = 3 on scale y does not match to any one of the allowed parameter values on scale x. Thus, parameter value pes1 = 3.0 has to be transformed into a suitable parameter value on scale y which is parameter value psp1 = 2 according to FIG. 3b).

If the parameter interval of a set of primary data is clipped, then the data value is adjusted during transformation. Such adaptation of the data value is also performed when the parameter interval of a set of primary data is extended to a more broad parameter interval on the second scale. Likewise, if the parameter interval associated to the primary data value is adjusted to the granularity/resolution of the second scale, the data value associated to the primary data is adjusted in some way with regard to the modified parameter interval. Clipping at logical array bounds and normalization of the data by the length of the parameter interval is preferably performed under the principle of preserving the integral of the original function.

Figure 3 shows how this value adjustment can be realized. The original set of primary data [pss1 = 3, pes1 = 10, Hs1 = 2] - see FIG. 3a) is mapped into the set p1 of preprocessed data [psp1 = 2, pep1 = 10, Hp1 = 1.75] - see FIG. 3b). It is noted that the volume Vs1 = Vp1 = 14 remains the same.

An alternative mapping is shown in FIG. 4. FIG. 4a) shows the same set s 1 of primary data as shown in FIG. 3a). Target scale and target resolution in FIG. 4b) are the same as in FIG. 3b). However, in this particular way of preprocessing, the set s 1 of primary data is first split into two virtual sets s11 and s12 of primary data, which virtual sets s11 and s 12 are then transformed individually into sets p11 and p12 of preprocessed data. The splitting of the set s1 of primary data into virtual sets s11 and s12 is achieved by separating a virtual set s12 which parameter interval p_es12 = [pss 12; pes 12] can be mapped directly - i.e. without any adaptation - into a parameter interval p_ep12 = [psp12; pep12] on the second scale x with pss12 = psp12 = 6, and pes12 = pep12 = 10. As parameter interval p_es12 = parameter interval p_ep12, there is no need to adjust the data value Hp12 = Hs12 = Hs1 = 2.0 for preserving the volume Vs12 = Vp12 = 8.

The remaining virtual parameter interval p_es11 instead has to be transformed in order to fit onto scale x. Thus, parameter interval p_es11 = [pss11 = 3.0; pes11 = 6.0] is transformed into parameter interval p_ep11 = [psp11 = 2.0; pep11 = 6.0]. In order to preserve volumes Vs11 = p_es11 * Hs1 = 6.0, data value Hp11 has to be adjusted to Hp11 = (Vs11 = Vp11 = 6.0) /(p_ep11 = 4.0) = 1.5. FIG. 4b) shows the set p 1 of preprocessed data comprising virtual sets p11 and p12. This sort of mapping involves more calculation, but is more volume-accurate for each dx.

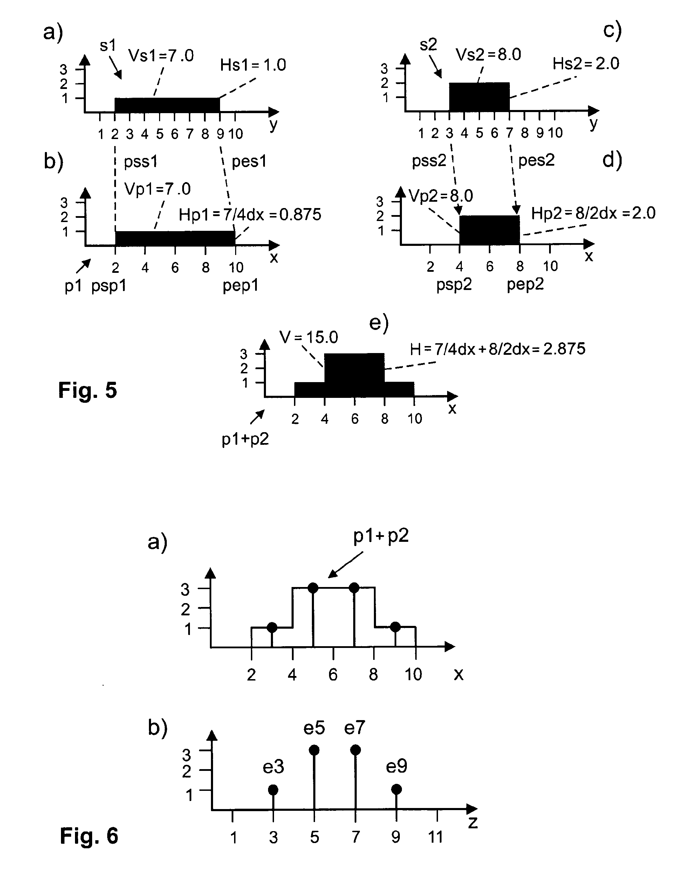

FIG. 5 shows another embodiment of transforming sets of primary data into sets of preprocessed data and aggregating such sets of preprocessed data. A set s1 of primary data in FIG. 5a) is transformed into the set p1 of preprocessed data in FIG. 5b), by way of transforming parameter interval p_es1 = [pss1 = 2; pes1 = 9] on scale y into parameter interval p_ep1 = [psp1 = 2; pep1 = 10] on scale y by way of preserving volumes Vs1 = Vp1 = 7 through adjusting data values from Hs1 = 1 to Hp1 = 0.875. Another set s2 of primary data in FIG. 5c) is transformed into the set p1 of preprocessed data in FIG. 5d), by way of transforming parameter interval p_es2 = [pss2 = 3; pes2 = 7] on scale y into parameter interval p_ep2 = [psp2 = 4; pep2 = 8] on scale y by way of preserving volumes Vs2 = Vp2 = 8 through keeping data values from Hs2 = 1 to Hp2 = 2. The sets p1, p2 of preprocessed data are aggregated on scale x according to FIG. 5e) before stored in a database.

Figure 6 shows how the aggregated sets p1 + p2 according to FIG. 5e) can be stored in a database. In FIG. 6a) the aggregated sets of preprocessed data are shown on the target scale x, as are already shown in FIG. 5e). In another step, information based on the aggregated sets of preprocessed data shall be stored in a database. The database might provide a structure in form of a recording scale on which data values can be stored. The resolution of the recording scale might be different to the one of the target scale such that another mechanism is provided for transforming sets of preprocessed data from the target scale into data entries on the recording scale. However, in another preferred embodiment, the target scale is identical to the recording scale such that no further transformation of the sets of preprocessed data is required.

However, in FIG. 6b) a discrete recording scale z is shown comprising a resolution dz different to the resolution dx of the target scale x. Generally, it is understood that even if scales show the same absolute value of resolution, resolutions associated to such scales are nevertheless considered to be different if the allowed values on the different scales are different, as shown in the example in FIG. 6. The absolute value of resolution dx is equal to the absolute value of resolution dz, however, allowed parameter values are different in scale x and scale z . Thus, another transformation is executed to derive data entries for the database on the recording scale from the e.g. aggregated sets of preprocessed data on the target scale x. According to FIG. 6a), during the period on scale x between 2 and 4, the average data value is 1, so a possible representation would be to store at index i = (4-2)+(dx/2) = 3 the average value vi = 1, and so on. For clarifying purposes, a parameter value on the recording scale is also called index. The entry in the database could then have a format derivable from FIG. 6b) such as: [index i = 3: entry e3 = 1; index i = 5: entry e5 = 3; index i = 7: entry e7 = 3; index i = 9: entry e9 = 1]. In this embodiment, the recording scale represents an index array comprising entries representing the set of preprocessed data. The index array denotes the information physically stored in the database. As the example according to FIG. 6 shows, aggregated sets of preprocessed data may be resampled dynamically with a lower resolution, e.g., in order to reduce the memory requirements for recording historic data entries.

According to another interpretation of FIGs 3, 4 and 5, any primary data set is given by its first parameter interval and the associated volume. The first parameter interval is mapped to the second parameter interval on the second scale according to any method introduced above. For the second scale, a sampling rate is provided. E.g. for the second parameter interval p_ep1 shown in FIG. 5b), samples at indices i = 3, 5, 7 and 9 are provided according to FIG. 6a). These samples cover the second parameter interval p_ep1 = [2; 10]. To each of these samples a fraction of the volume Vs1 of the set of primary data s1 is assigned as entry. This fraction is computed by the dividing the volume Vs1 by the number of samples - which is four - at indices - in this example i = 3; i = 5; i = 7; i = 9 - and by the resolution of the scale dx - which dx = 2 in the example above. The result is an index array [index i = 3: entry e3 = 1; index i = 5: entry e5 = 3; index i = 7: entry e7 = 3; index i = 9: entry e9 = 1] which is stored in the database. By way of adding values derived from volumes of other sets of primary data an aggregated sample array is maintained in the database that is logically indexed by the number of samples.

Irrespective of the way sets are transformed and stored, the storing process as such can also be executed "online" which means that received sets of primary data are processed immediately for storing associated entries in the database.

The following paragraphs refer to the way of allocating memory resources in a database for effectively storing entries derived from sets of preprocessed data. Array in this context is understood as limited range of parameter values - or indices - on a recording scale reserved for entries to be recorded. Such range on the recording scale might simultaneously represent memory of the database allocated for such entries. An aggregation array, i.e. an array for aggregating entries, can be created based on specified array bounds [z0, zn] on the recording scale, a specified sampling interval dz on this scale. The array limits z0 and zn determine the logical array bounds. The sampling interval dz determines the array granularity/resolution. The logical array can hold up to (zn-z0)/dz entries.

In some embodiments, the recording scale is identical to the target scale such that no transformation from the target scale to the recording scale is required, and no differentiation between a target scale and a recording scale is required. Thus, provided the recording scale is identical to the target scale, any restriction introduced with regard to the recording scale such as bounds, flags, and others as explained elsewhere in this description is automatically applicable to the target scale and vice versa.

In some embodiments a flag is associated to such array which flag specifies entries to be inserted with monotonically increasing recording parameter values. If a monotonic flag is associated to a recording scale or an array on such scale, data entries are inserted as if they have monotonically increasing parameter/index values: Array space is allocated starting with the first data entry insertion and no space is allocated for entries associated to parameter values smaller than the parameter value of the first entry. If parameter values are not monotonic although the array is flagged as monotonic, such parameter values are clipped according to the lower physical array bound or even deleted. Such mechanism supports the recording of measurement data in particular when the parameter for such data is "time" since sets of primary data are then expected to be received in a timely progressing manner. There is no need then to respect entries associated to past parameter values since the occurrence of such data indicates some failure in the data entries delivered.

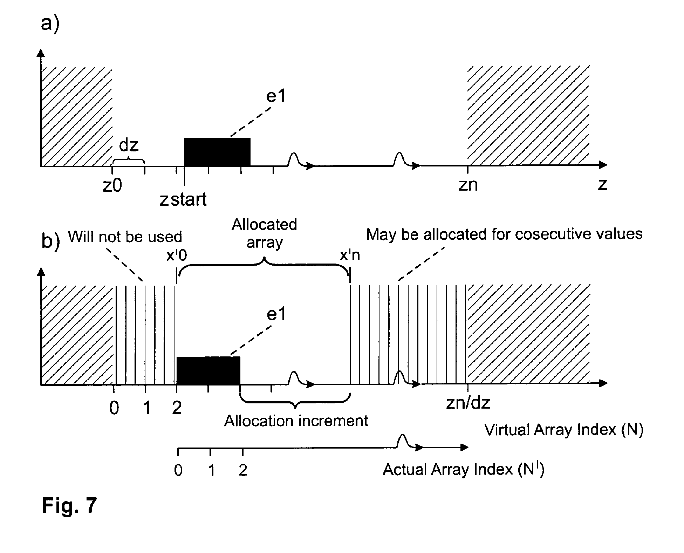

Figure 7 illustrates an incremental array allocation on a recording scale z. It is considered to be a waste of memory if the database provides memory for every possible parameter value on the recording scale since some of the parameter values might never be filled with any other information than "no data entry is recorded here" which is equivalent to "data entry = 0". Hence, it is preferred, that together with the occurrence and consequently with the insertion of the first data entry into the recording scale at a given parameter value on that scale, a part of the array is allocated. If in addition such array was specified with a monotonic flag, it can be assumed that no data entry associated to a smaller parameter value will be received. In one embodiment, information such as a monotonic flag can be stored in a reserved header field associated with the array. Therefore, the actual array can start from the parameter value of the first data entry, and memory space is only allocated to parameter values exceeding this parameter value.

Summarizing, such array is extended and/or evolved by fixed or variable amounts - such amounts finally representing allocated memory space for the data storing application - as necessary to store new data entries. Array space is allocated starting with the first data entry insertion. If the array is to be filled only with data entries of monotonically increasing parameter values, no space is allocated for data entries with parameter values smaller than the parameter value of the first data entry.

In FIG. 7a), there is specified an array [z0; zn] on a recording scale z which array indicates a primary range of allowed parameter values [z0; zn] for values to be stored. The hatched ranges on scale z are thus not allowed to record data and thus do not have to be allocated in form of memory space.

A first entry e1 which is meant to be an entry being timely the first one in a row of succeeding entries is already mapped to the recording scale z. Due to the setting of a monotonic flag associated to the array, no entry associated to a parameter value smaller than the starting parameter value zstart of this first entry e1 is be expected, such that any parameter values zi following z0 < zi < zstart are not going to be subject for storing any other entry. As can be derived from FIG. 7b), these parameter values are also not needed any longer, and consequently no memory space is allocated for these parameter values, see area with longitudinal stripes left of entry e1 in FIG. 7b). The initial array bound z0 is thus shifted to the parameter value zstart. The array is further limited, and the array index now starts with the index = 0 as shown on the very bottom of FIG. 7b) - on a scale also called the Actual Array Index - which entries associated to such index are recorded in the database. This index is a priori limited by the upper array bound xn and any additional allocation of memory for the array is only possible until an index representing the upper array bound xn is reached.

It is noted that the scale in FIG. 7b) upper part is the scale of FIG. 7a) depicted in a normalized way.

In order to save space not only at the beginning of the array, but also at the end of the array, the array space is preferably allocated in fixed increments from the end of the last parameter that doesn't fit into the previously allocated increment anymore.

In one embodiment, the process does not yet allocate an array but only stores header information with the array. Running counters are maintained for accumulated, average, minimum, and maximum inserted data entries. Such information can be stored in a reserved header field associated with the array. With each data insertion, the header information is updated. A combination of storing the array itself and additionally storing header information is alsoe preferred.

A logical view onto the expanding array is provided for transparent access within the specified logical array bounds. The logical view may be fixed (e.g., a specific hour) or sliding (e.g., the last 60 minutes).

The method as proposed can be implemented in any standard programming language, e.g. in C/C++.

Computer readable program code or program code in the present context mean any expression, in any language, code or notation, of a set of instructions intended to cause a system having an information processing capability to perform a particular function either directly or after either or both of the following a) conversion to another language, code or notation; b) reproduction in a different material form.

While the invention has been described with reference to exemplary embodiments, it will be understood by those skilled in the art that various changes may be made and equivalents may be substituted for elements thereof without departing from the scope of the invention.

## Claims

1. Method for storing a set of data, comprising
• receiving a set of primary data (s1) comprising a first data value (Hs1) associated to a first parameter interval (p_es1) which first parameter interval (p_es1) is related to a first scale (y) comprising a first resolution (dy),
• transforming said set of primary data (s1) into a set of preprocessed data (p1) comprising a second data value (Hp1) associated to a second parameter interval (p_ep1) which second parameter interval (p_ep1) is related to a second scale (x) comprising a second resolution (dx), by determining said second data value (Hp1) such that a volume (Vs1) of said set of primary data (s1) determined by said first parameter interval (p_es1) and said first data value (Hs1) is preserved in said set of preprocessed data (p1), and
• storing an entry in a database (34) which entry is based on said set of preprocessed data (p1).

2. Method according to claim 1,
wherein said resolution (dy) of said first scale (y) is different to said resolution (dx) of said second scale (x).

3. Method according to claim 1 or claim 2,
wherein said volume (Vs1) of said set of primary data (s1) given by said first parameter interval (p_es1) multiplied with said first data value (Hs1) is equal to a volume (Vp1) of said set of preprocessed data (p1) given by the second data value (Hp1) multiplied with said second parameter interval (p_ep1).

4. Method according to any one of the preceding claims, comprising
determining said second parameter interval (p_ep1) such that parameter values (pss1; pes1) limiting said first parameter interval (p_es1) on said first scale (y) are transformed into parameter values (psp1; pep1) limiting said second parameter interval (p_ep1) on said second scale (x) which parameter values (psp1; pep1) on said second scale (x) are parameter values admitted on said second scale (x) that come closest to said parameter values (pss1; pes1) of said first parameter interval (p_es1).

5. Method according to any one of the preceding claims, comprising
• sampling said second parameter interval (p_ep1) at a given sampling rate, and
• storing values (ei) sampled therefrom as entries in said database (34).

6. Method according to any one of the preceding claims, comprising
• receiving another set of primary data (s2) comprising another first data value (Hs2) associated to a another first parameter interval (p_es2) which other first parameter interval (p_es2) is related to said first scale (y) comprising said first resolution (dy),
• transforming said other set of primary data (s2) into another set of preprocessed data (p2) comprising another second data value (Hp2) associated to another second parameter interval (p_ep2) which other second parameter interval (p_ep2) is related to said second scale (x) comprising said second resolution (dx), by determining said other second data value (Hp2) such that a volume (Vs2) of said other set of primary data (s2) determined by said other first parameter interval (p_es2) and said other first data value (Hs2) is preserved in said other set of preprocessed data (p2),
• storing an entry in said database (34) which is based on said other set of preprocessed data (p2).

7. Method according to claim 6, comprising
• aggregating said set of preprocessed data (p1) and said other set of preprocessed data (p2), and
• storing an entry in said database (34) based on said aggregated sets of preprocessed data (p1; p2).

8. Method according to claim 6, comprising
storing an entry in said database (34) based on said other set of preprocessed data (p2) by way of aggregating such entry to an existing entry based on said set of preprocessed data (p1).

9. Method according to claim 7, comprising
• sampling said sets of preprocessed data (p1; p2) at a given sampling rate, and
• storing values (ei) sampled therefrom as entries in said database (34).

10. Method according to any one of the preceding claims, comprising
• providing a sampling rate for said second scale (x),
• determining a number of samples (i) for covering said second parameter interval (p_es1),
• assigning to each sample (i) a fraction of said volume (Vs1) as value (ei), and
• storing said sample values (ei) as entries in said database (34).

11. Method according to any one of the claims 5, 9 or 10, comprising
maintaining an aggregated sample array in said database that is logically indexed by the number of samples.

12. Method according to claim 11, comprising
allocating memory space in said database beginning with the first sample a value (ei) is associated to.

13. Method according to claim 11 or claim 12, comprising
incrementing entries in said aggregated sample array by adding values (ei) derived from new sets of primary data.

14. Entity for storing a set of data, comprising
a control unit (32) designed for executing steps according to a method as claimed in any one of the preceding claims.

15. Computer program element, comprising computer program code for executing a method as claimed in any one of the preceding claims 1 to 13 when loaded into a processor unit of a computer.

16. Computer program product stored on a computer usable medium, comprising computer readable program code for causing a computer to perform the steps of a method as claimed in any one of the preceding claims 1 to 13.
